# EUROPÄISCHE PATENTANMELDUNG

(11) **EP 2 309 161 A1**
(43) Veröffentlichungstag der Anmeldung: **13.04.2011**
(21) Anmeldenummer: 10009324.4
(22) Anmeldetag: 08.09.2010
(51) Int. Cl.: F16K 15/20

(54) **Reifenfülladapter**

(30) Priorität: 10.10.2009 DE 102009048929
(71) Anmelder: Schneider Druckluft GmbH, 72770 Reutlingen (DE)
(72) Erfinder: Meier, Markus, 73779 Deizisau (DE)
(74) Vertreter: Bregenzer, Michael

(57) **Zusammenfassung**

Reifenfülladapter (10a) zum Anschluss einer Fluidleitung (75) an ein Reifenventil (80), wobei zum beweglichen Führen eines Stößel-Betätigungsglieds (25) und einer Dichtung (50a; 50b) relativ zueinander ein Führungskörper (28) vorgesehen ist, so dass der Verschlussstößel, während die Dichtung (50a; 50b) in der Dichtstellung (D) ist, durch ein Stößel-Betätigungsglied (25) zwischen der Offenstellung (O) und der Verschlussstellung (V) verstellbar ist, in der der Reifenventil-Verschlussstößel (86) den Reifenventil-Durchgangskanal (85) verschließt.

## Beschreibung

Die Erfindung betrifft einen Reifenfülladapter zum Anschluss einer Fluidleitung an ein Reifenventil, mit einem Ventil-Aufnahmeraum, in den ein Reifenventil-Anschlusskörper an einem freien Ende des Reifenventils entlang einer Steckachse einsteckbar ist, mit einer Dichtung, die in eine den Reifenventil-Anschlusskörper fluid-dicht mit dem Reifenfülladapter verbindende Dichtstellung bringbar ist, und mit einem zwischen einer Offenstellung und einer Schließstellung verstellbaren Stößel-Betätigungsglied zum Betätigen eines in einem Innenraum des Reifenventil-Anschlusskörpers angeordneten Reifenventil-Verschlussstößels, der in der Offenstellung einen den Reifenventil-Anschlusskörper durchsetzenden Reifenventil-Durchgangskanal offen hält, so dass eine Fluid-Verbindung zwischen dem Reifenventil-Durchgangskanal und mindestens einem mit dem Leitungsanschluss für die Fluidleitung kommunizierenden und an einem Leitungskörper angeordneten Fluid-Durchlass des Reifenfülladapters vorhanden ist.

Zum Befüllen von Reifenventilen mit einem Fluid, in der Regel Druckluft, benötigt man einen Reifenfülladapter, der an das am Reifen angeordnete Reifenventil anschließbar ist. Üblicherweise haben die Reifenfülladapter, die man beispielsweise an Tankstellen vorfindet, einen Kipphebel, der eine im Ventil-Aufnahmeraum des Reifenfülladapters angeordnete Dichtung staucht oder quetscht, so dass diese am Reifenventil-Anschlusskörper anliegt. Dann ist der Reifenfülladapter fluid-dicht mit dem Reifenventil verbunden. Allerdings muss dazu der Reifenfülladapter bekannter Art auf das Reifenventil bereits aufgesetzt werden, wobei ein im Inneren des Reifenfülladapters angeordnetes Stößel-Betätigungsglied den Reifenventil-Verschlussstößel öffnet. Beim Anschließen des bekannten Reifenfülladapters an das Reifenventil und auch beim Entfernen von diesem entweicht stets eine gewisse Menge des Fluid aus dem Reifen. Somit verändert sich ein beim Befüllen des Reifens gewählter Druck, wenn man den Reifenfülladapter vom Reifenventil entfernt. Dadurch sind die Druckverhältnisse im Reifen anders als gewünscht.

Wenn statt der relativ kostengünstig bereitstellbaren Druckluft ein anderes Fluid, beispielsweise ein Edelgas, zum Einsatz kommt, ist der Fluidverlust beim Anschließen oder Entfernen des Reifenfülladapters vom Reifenventil auch aus Kostengründen nicht vorteilhaft.

Es ist daher die Aufgabe der vorliegenden Erfindung, einen bequem handhabbaren, verlustfrei oder im Wesentlichen verlustarm an ein Reifenventil anschließbaren Reifenfülladapter bereitzustellen.

Bei einem Reifenfülladapter der eingangs genannten Art ist zur Lösung der Aufgabe vorgesehen, dass er einen Führungskörper zum beweglichen Führen des Stößel-Betätigungsglieds und der Dichtung relativ zueinander aufweist, so dass der Verschlussstößel, während die Dichtung in der Dichtstellung ist, durch das Stößel-Betätigungsglied zwischen der Offenstellung und der Verschlussstellung verstellbar ist, in der der Reifenventil-Verschlussstößel den Reifenventil-Durchgangskanal verschließt.

Der erfindungsgemäße Reifenfülladapter ist einfach zu bedienen. Die flexible, beispielsweise aus Gummi und/oder Kunststoff bestehende, Dichtung befindet sich bereits in der Dichtstellung, wenn das Stößel-Betätigungsglied zwischen der Offenstellung und der Verschlussstellung verstellt wird. Dadurch entweicht keine Luft oder ein sonstiges Fluid, das mit dem Reifenfülladapter in den Reifen eingefüllt wird. Auch beim Entfernen des Reifenfülladapters vom Reifenventil wird ein unerwünschter Druckverlust vermieden. Die Dichtung ist fluid-dicht mit dem Reifenventil verbunden, während das Stößel-Betätigungsglied aus der Offenstellung in die Verschlussstellung verstellt wird, insbesondere verschoben. Somit ist beispielsweise eine Fehlbedienung vermieden. Fluid, insbesondere Druckluft, entweicht nicht aus dem Reifenventil, solange dieses mit dem Reifenfülladapter verbunden ist und der Reifenventil-Verschlussstößel seine Verschlussstellung erreicht hat.

Ein erfindungsgemäßes Konzept ist es also, dass das Stößel-Betätigungsglied bei bereits schon oder noch immer in Dichtstellung befindlicher Dichtung betätigt wird.

Im Rahmen der Erfindung kommt ein zweistufiges Bedienkonzept zum Tragen, nämlich zunächst die Herstellung einer dichten Verbindung zwischen dem Reifenfülladapter und dem Reifenventil und anschließend einer Betätigung des Reifenventil-Verschlussstößels bzw. beim Entfernen des Reifenfülladapters in umgekehrter Richtung. Zweistufig ist dabei nicht so zu verstehen, dass die beiden Schritte Herstellen der Dichtstellung und Öffnen des Reifenventils bzw. umgekehrt streng sequenziell ablaufen müssen. Es ist auch ein kontinuierlicher Übergang zwischen den beiden Betätigungsschritten möglich, nämlich dass die Dichtstellung erst dann optimal ist, wenn das Stößel-Betätigungsglied den Reifenventil-Verschlussstößel letztlich öffnet. Mithin kann also die Dichtung bereits in einer Lösestellung, in der der Reifenventil-Anschlusskörper von dem Reifenventiladapter lösbar ist bzw. umgekehrt, eine Abdichtung des Reifenfülladapters am Reifenventil bewirken, die durch das Andrücken oder Klemmen noch verbessert wird.

Die Dichtwirkung wird also verbessert, wenn durch nachfolgend noch beschriebene Mittel die Dichtung in Richtung des Reifenventil-Anschlusskörpers angedrückt und eine Andrückstellung oder Klemmstellung erreicht wird. Der Reifenventil-Anschlusskörper ist allerdings in dem Ventil-Aufnahmeraum bereits im Wesentlichen fluid-dicht aufgenommen, wenn er in diesen eingesteckt ist und die Dichtung nicht oder noch nicht vollständig an den Reifenventil-Anschlusskörper angedrückt oder angepresst ist.

Mithin umschließt also die Dichtung in der Dichtstellung den Reifenventil-Anschlusskörper fluid-dicht.

Bevorzugt ist es, wenn die Dichtung den Ventil-Aufnahmeraum aufweist.

Die Dichtung kann mehrere der nachfolgend beschriebenen Bestandteile oder Bereiche aufweisen, die voneinander separat sein können, vorzugsweise jedoch fest miteinander verbunden, insbesondere einstückig sind.

Die Dichtung umfasst zweckmäßigerweise einen Dichtring oder einen Dichtringabschnitt zur Anlage an einer Stirnseite des Reifenventil-Anschlusskörpers. Diese stirnseitige Abdichtung hat den Vorteil, dass es auf ein ebenfalls bevorzugtes, jedoch nicht zwingendes seitliches Anpressen der Dichtung an den Reifenventil-Anschlusskörper nicht unbedingt ankommt. Bereits die stirnseitige Abdichtung ermöglicht es, dass eine fluid-dichte bzw. luftdichte Verbindung zwischen dem Reifenfülladapter und dem Reifen-Anschlussventil möglich ist.

Der Leitungskörper, an dem der mindestens eine Fluid-Durchlass angeordnet ist, liegt in der Offenstellung des Stößel-Betätigungsgliedes, d.h. also auch der Offenstellung des Reifenventil-Verschlussstößels, vorteilhaft an der Dichtung an. Hierbei ist eine stirnseitige Anlage bevorzugt, beispielsweise an dem vorgenannten Dichtring oder einer weiteren Ringkontur. Aber auch eine radiale Anlage bzw. eine Anlage an einem Außenumfang des Leitungskörpers ist vorteilhaft. Bevorzugt ist es weiterhin, wenn der Leitungskörper die Dichtung zu dem Reifenventil-Anschlusskörper hin betätigt oder Kraft beaufschlagt. Beispielsweise drückt der Leitungskörper den Dichtring zu dem Reifenventil-Anschlusskörper hin bzw. beaufschlagt ihn dorthin.

Zweckmäßigerweise hat die Dichtung einen Dichtmantel zur Anlage an einem Außenumfang des Reifenventil-Anschlusskörpers.

Zur druckdichten Aufnahme des Leitungskörpers ist es vorteilhaft, wenn die Dichtung eine Dichtaufnahme zur Aufnahme des Leitungskörpers aufweist. Es ist prinzipiell aber auch möglich, dass der Leitungskörper beispielsweise ausschließlich an dem Dichtring anliegt oder aufliegt, um die Druckdichtigkeit zu erzielen.

Die druckdichte Aufnahme des Leitungskörpers ist insbesondere dann vorteilhaft, wenn das Stößel-Betätigungsglied in seiner Offenstellung steht, mithin also Luft aus dem Reifenventil oder in das Reifenventil strömt.

Eine Druckdichtigkeit kann aber auch beispielsweise dadurch erreicht werden, dass an einem Außenumfang des Leiterkörpers ein Dichtungselement, insbesondere ein O-Ring, eine ringförmige Dichtfläche oder dergleichen, angeordnet ist, das bzw. die am Innenumfang einer Aufnahme anliegt, in die der Leitungskörper eindringt oder in der der Leitungskörper aufgenommen ist, insbesondere wenn sich das Stößel-Betätigungsglied in der Offenstellung befindet. Die Aufnahme für den Leitungskörper, an der das Dichtelement anliegt, ist beispielsweise an dem später noch erläuterten Dichtungshaltekörper vorgesehen. Jedenfalls ist das Dichtungselement flexibel, wohingegen die Aufnahme starr sein kann.

Der Dichtring, der Dichtmantel oder die Dichtaufnahme sind vorzugsweise fest mit einander verbunden, insbesondere einstückig. An dieser Stelle sei bemerkt, dass die Bestandteile der Dichtung auch separate Bauteile sein können. Beispielsweise ist es denkbar, dass der Dichtung und der Dichtmantel an einem gemeinsamen Halter angeordnet sind.

Ein weiterer erfindungsgemäßer Gedanke ist es, die Dichtung vorteilhafterweise nicht oder allenfalls geringfügig axial zu stauchen oder zu quetschen. Vielmehr ist es zweckmäßig, wenn die Dichtung in einer Andrückstellung, in der sie an den Reifenventil-Anschlusskörper angedrückt ist, bezüglich der Steckachse im Wesentlichen ohne axiale Stauchung ist. Die Dichtung wird beispielsweise von einem Dicht-Betätigungsglied ohne oder im Wesentlichen ohne axiale Stauchung nach radial innen zu einem Außenumfang des Reifenventil-Anschlusskörpers verdrängt.

Der Leitungskörper beaufschlagt vorteilhaft die Dichtung in Steckachsrichtung zum Reifenventil-Anschlusskörper hin. Dabei ist es zweckmäßig, wenn die Beaufschlagung ganz oder im Wesentlichen stirnseitig erfolgt. Ein Umfangsmantel der Dichtung wird zweckmäßigerweise nicht der kaum beaufschlagt, so dass der Umfangsmantel der Dichtung kaum oder gar nicht axial bezüglich der Steckachsrichtung gestaucht oder gequetscht wird. Beispielsweise ist die Dichtung, insbesondere der Dichtring, zwischen dem Leitungskörper und dem Reifenventil-Anschlusskörper geklemmt. Dadurch erzielt man eine besonders gute, flächige stirnseitige Abdichtung zwischen dem Leitungskörper und dem Reifenventil-Anschlusskörper.

Der Führungskörper und das Stößel-Betätigungsglied sind zweckmäßigerweise bewegungsfest miteinander verbunden. Mindestens ein Bestandteil der Dichtung oder die Dichtung insgesamt hingegen sind an den Führungskörper vorzugsweise mittelbar oder unmittelbar geführt und relativ zu dem Stößel-Betätigungsglied beweglich gelagert. Somit ist es also beispielsweise möglich, den Führungskörper in Richtung des Reifenventils zu verstellen, so dass das Stößel-Betätigungsglied den Reifenventil-Verschlussstößel betätigen kann, während die Dichtung an Ort und Stelle, ihre Dichtstellung beibehaltend oder durch Andrücken oder Verklemmen sogar verbessernd, am Reifenventil-Anschlusskörper bleibt.

Das Stößel-Betätigungsglied ist vorzugsweise an dem Leitungskörper angeordnet. Vorteilhaft verlaufen einer oder mehrere der vorgenannten Fluiddurchlässe neben dem Stößel-Betätigungsglied in Richtung des Leitungskörpers bzw. eines Durchgangskanals, der den Leitungskörper durchsetzt.

Eine bevorzugte Anordnung sieht vor, dass das Stößel-Betätigungsglied feststehend in einem Innenraum des Führungskörpers angeordnet ist. Auch die Dichtung ist zweckmäßigerweise in einem Innenraum des Führungskörpers angeordnet, jedoch nicht feststehend, sondern vorzugsweise schiebebeweglich. Der Führungskörper kann beispielsweise einen Führungskäfig, ein Gestell, eine Führungsschienenanordnung oder dergleichen umfassen, mithin also eine offene Konstruktion sein. Bevorzugt ist es jedoch, wenn der Führungskörper ein Führungsgehäuse umfasst. Der Führungskörper und somit auch das Führungsgehäuse können einteilig oder auch mehrteilig sein. Die mehrteilige Bauweise, die beispielsweise ein Verkleben oder Verschrauben von Komponenten des Führungskörpers oder Führungsgehäuses vorsieht, ermöglicht eine einfache Montage des Reifenfülladapters.

Es ist vorteilhaft, wenn die Dichtung durch ein Bauteil des Reifenfülladapters an den Reifenventil-Anschlusskörper hin in eine Andrückstellung drückbar und/oder in eine Klemmstellung klemmbar ist, z.B. durch ein Dicht-Betätigungsglied:
Der Reifenfülladapter ist vorzugsweise mit einem Dicht-Betätigungsglied zum Andrücken der Dichtung zu dem Reifenventil-Anschlusskörper hin in eine Andrückstellung ausgestattet. Ein zweckmäßiges festeres Andrücken kann man auch als Klemmen ansehen, so dass das Dicht-Betätigungsglied die Dichtung in eine Klemmstellung bringen kann bzw. als Klemm-Betätigungsglied bezeichnet werden kann. Dieses Dicht-Betätigungsglied kann beispielsweise ein beweglich am Führungskörper gelagertes Bauteil sein. Bevorzugt ist jedoch, wenn das Dichtbetätigungsglied durch den Führungskörper gebildet oder an dem Führungskörper feststehend angeordnet ist. Beispielsweise bildet das Führungsgehäuse das Dicht-Betätigungsglied.

In der Andrückstellung ist es vorteilhaft, wenn das Dicht-Betätigungsglied einen Dichtmantel der Dichtung ringförmig oder teilringförmig nach radial innen in Richtung eines Außenumfangs des Reifenventil-Anschlusskörpers drückt. Auf diese Weise trägt das Dicht-Betätigungsglied dazu bei, dass eine axiale Stauchung der Dichtung bezüglich der Steckachse gering ist oder gar nicht vorhanden.

Das Dicht-Betätigungsglied und die Dichtung sind vorzugsweise relativ zueinander schiebebeweglich gelagert. An dieser Stelle sei bemerkt, dass selbstverständlich auch eine Drehbetätigung zum Betätigen des Dicht-Betätigungsglieds in die Andrückstellung denkbar ist, beispielsweise mittels einer exzentrischen Lagerung oder dergleichen.

Die Dichtung könnte prinzipiell zwar freistehend ausgestaltet sein, so dass beispielsweise das Dicht-Betätigungsglied unmittelbar auf die Dichtung wirkt. Bevorzugt ist jedoch die Dichtung an einer separaten Halterung angeordnet, die zweckmäßigerweise auch eine Schutzfunktion für die Dichtung hat. Ein Ausführungsbeispiel der Erfindung sieht vorzugsweise vor, dass die Dichtung zumindest teilweise in oder an einem Dichtungshaltekörper feststehend gehalten ist. Das Dicht-Betätigungsglied und der Dichtungshaltekörper sind relativ zueinander verschieblich. Der Dichtungshaltekörper weist eine Flexibilität auf derart, dass bei einem Verschieben des Dicht-Betätigungsglieds oder der Dichtung durch das Dicht-Betätigungsglied über den Dichtungshaltekörper zu dem Reifenventil-Anschlusskörper hin verstellbar ist. Mithin befindet sich also der Dichtungshaltekörper zwischen dem Dicht-Betätigungsglied und der Dichtung und erlaubt beispielsweise eine Verstellung der Dichtung nach radial innen in die Andrückstellung.

Der Dichtungshaltekörper ist zweckmäßigerweise hülsenförmig. Bevorzugt umfasst der Dichtungshaltekörper einen Schutzkäfig oder eine Käfigstruktur. Weiterhin ist es vorteilhaft, wenn der Dichtungshaltekörper eine Lamellenstruktur umfasst. Die Lamellen erstrecken sich beispielsweise entlang der Steckachse.

Der Dichtungshaltekörper bildet vorteilhaft ein Führungsbauteil zum Führen der Dichtung an oder in dem Führungskörper. Zweckmäßigerweise gleiten der Führungskörper und der Dichtungshaltekörper aneinander vorbei, wenn die Dichtung zwischen der Lösestellung und der Andrückstellung oder der Klemmstellung verstellt wird. Der Dichtungshaltekörper hat eine höhere Gleitfähigkeit als die Dichtung.

Weiterhin ist es zweckmäßig, wenn eine Federanordnung die Dichtung zu dem Reifenventil-Anschlusskörper hin belastet. Die Federanordnung stützt sich beispielsweise an dem Führungskörper und an der Dichtung und/oder dem Dichtungshaltekörper ab. Bevorzugt ist es, wenn die Federanordnung die Dichtung zu einer Stirnseite des Reifenventil-Anschlusskörpers hin belastet. Beispielsweise stützt sich die Federanordnung an der Dichtung ringförmig ab, beispielsweise an dem vorgenannten Dichtring. Eine bevorzugte Anordnung sieht dabei vor, dass der Leitungskörper die Federanordnung durchsetzt. Die Federanordnung umfasst beispielsweise eine Schraubenfeder. Die Federanordnung kann beispielsweise den Vorteil haben, zur Dichtwirkung beizutragen, indem sie die Dichtung stirnseitig in Richtung des Reifenventil-Anschlusskörpers hin belastet. Dieser Vorteil ist insbesondere beim Lösen des Reifenfülladapters vom Reifenventil vorhanden, weil die Federanordnung die Dichtung stirnseitig am Reifenventil hält, während der Reifenfülladapter in Richtung der Steckachse von dem Reifenventil abgezogen wird. Somit ist also auch beim Entfernen des Reifenfülladapters und/oder beim Zurückziehen oder axialen Verstellen des Stößel-Betätigungsglieds von dem Reifenventil eine stirnseitige Dichtung zwischen dem Reifenfülladapter und dem Reifenventil vorhanden.

Beim Anschließen des Reifenfülladapters an das Reifenventil ist eine Stützfläche zum Abstützen an dem Reifenventil vorteilhaft, die die Funktion hat, dass sich der Führungskörper am Reifenventil beim Aufstecken des Reifenfülladapters auf das Reifenventil abstützt und der Reifenventil-Anschlusskörper die Dichtung in Richtung des Stößel-Betätigungsgliedes verstellt. Der Reifenventil-Anschlusskörper wirkt dabei zweckmäßigerweise entgegen der Kraft der vorgenannten Federanordnung. Die Dichtung gelangt durch das vorgenannte, vorzugsweise durch den Führungskörper gebildete, Stößel-Betätigungsglied in die Andrückstellung oder Klemmstellung, während gleichzeitig das Stößel-Betätigungsglied den Reifenventil-Verschlussstößel öffnet.

Der Reifenfülladapter hat zweckmäßigerweise eine Rastanordnung zum Verrasten der Dichtung, beispielsweise in der Klemm- oder Andrückstellung, in der die Dichtung an den Reifenventil-Anschlusskörper angedrückt ist, und/oder in der Lösestellung, in welcher die Dichtung und der Reifenventil-Anschlusskörper voneinander lösbar sind. Selbstverständlich hat die Dichtung auch in der Lösestellung, wie oben erwähnt, eine gewisse Druckdichtigkeit, wenn auch eine geringere, als in der Andrückstellung. Die Rastanordnung hält also die Dichtung beispielsweise in der Lösestellung, bis der Reifenfülladapter beim Aufstecken an den Reifenventil-Anschlusskörper insbesondere stirnseitig anliegt. Erst wenn also auf diesem Wege eine gewisse Dichtigkeit zu dem Reifenventil-Anschlusskörper hergestellt ist, löst sich die Rastverbindung, so dass beispielsweise das Dicht-Betätigungsglied die Dichtung in die Andrückstellung verstellen kann.

Zum Andrücken der Dichtung in die Andrückstellung könnte beispielsweise bei dem Dicht-Betätigungsglied und/oder der Dichtung und/oder dem Dichtungshaltekörper eine Schrägfläche vorgesehen sein. Bevorzugt ist es, wenn ein Rastvorsprung der Rastanordnung eine solche Schrägfläche aufweist oder als ein Andruckmittel dient, mit dem die Dichtung in Richtung des Reifenventil-Anschlusskörpers verstellbar ist.

Nachfolgend werden Ausführungsbeispiele anhand der Zeichnung erläutert. Es zeigen:
- Figur 1: eine Explosionsdarstellung eines ersten erfindungs- gemäßen Reifenfülladapters,

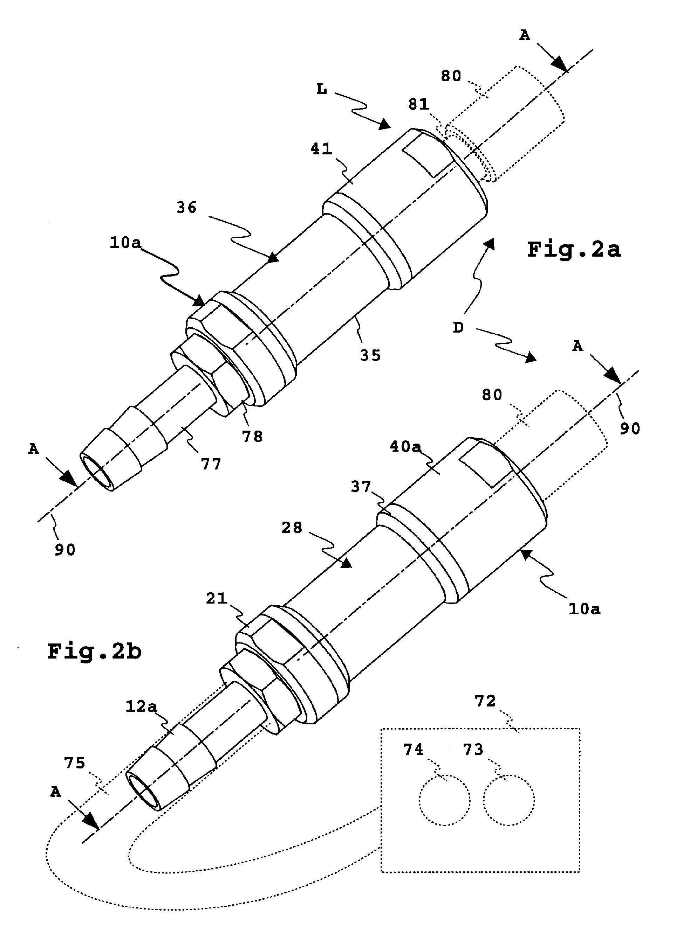

- Figur 2a: den Reifenfülladapter gemäß Figur 1 in einem auf ein Reifenventil aufgesteckten, jedoch noch nicht an dieses angedrücktem Zustand,
- Figur 2b: die Anordnung gemäß Figur 2a, jedoch mit fest an das Reifenventil angedrücktem oder geklemmtem Rei- fenfülladapter,
- Figur 3a: einen Querschnitt der Anordnung gemäß Figur 2a ent- lang einer Schnittlinie A-A,
- Figur 3b: einen Querschnitt der Anordnung gemäß Figur 2b, entlang einer Schnittlinie A-A,
- Figur 4a: einen Querschnitt einer Anordnung mit einem zweiten erfindungsgemäßen Reifenfülladapters in einer Löse- stellung, geschnitten etwa entlang einer Schnittli- nie A-A gemäß Figur 2a und
- Figur 4b: die Anordnung gemäß Figur 4a, jedoch in einer Andrückstellung.

Ein Reifenfülladapter 10a dient zum Anschluss einer zumindest abschnittsweise flexiblen und/oder zumindest abschnittsweise starren Fluidleitung 75 an ein Reifenventil 80. Die Fluidleitung 75, die z.B. mit einem Druckmessinstrument 74 und/oder einem Druckspeicher 73 eines stationären oder mobilen Reifenfüllgeräts 72 verbunden ist (schematisch dargestellt), ist beispielsweise auf eine Tülle 77 eines Schlauchanschlussstückes 76 aufgesteckt, die einen Flanschvorsprung 78 sowie ein Gewinde 79 zum Anschrauben an den Reifenfülladapter 10a aufweist. Mithin ist also die Fluidleitung 75 mittels des Schlauchanschlussstückes 76 am Reifenfülladapter 10a befestigt.

Selbstverständlich kann ein erfindungsgemäßer Reifenfülladapter auch unmittelbar Mittel zur Befestigung einer Fluidleitung aufweisen, beispielsweise eine Tülle, eine Schnellkupplung oder dergleichen.

Jedenfalls ist das vorteilhaft auswechselbare Schlauchanschlussstück 76 an einem Leitungsanschluss 11 des Reifenfülladapters 10a angeordnet. Der Leitungsanschluss 11 befindet sich an einem Leitungskörper 12a und weist eine Leitungsaufnahme 13 mit einem Innengewinde 14 auf, in die das Schlauchanschlussstück 76 mit seinem Gewinde 79 eingeschraubt ist, wobei der Flanschvorsprung 78 an einer Stirnwand 15, an der der Leitungsanschluss 11 angeordnet ist, anschlägt. Selbstverständlich könnte man ein Schlauchanschlussstück auch auf andere Weise an einem erfindungsgemäßen Reifenfülladapter befestigen, beispielsweise durch eine Bajonettverbindung, eine Klemmverbindung oder dergleichen oder es könnte eine Schnellkupplung vorgesehen sein.

Der Leitungsanschluss 11 mündet in einen ein Verbindungsrohr 16 des Leitungskörpers 12a durchsetzenden Durchgangskanal 17. Zwischen dem Verbindungsrohr 16 und der Leitungsaufnahme 13 befindet sich weiterhin ein Halteabschnitt 18 zum Halten eines Gehäuserohrs 30a. Am Außenumfang des Halteabschnitts 18 ist beispielsweise ein Außengewinde 19 angeordnet, auf das ein Innengewinde 31 des Gehäuserohrs 30a aufgeschraubt ist. Das Verbindungsrohr 16 befindet sich also in einem Innenraum 32 des Gehäuserohrs 30a. Das Gehäuserohr 30a schlägt mit seiner dem Leitungsanschluss 11 zugewandten Stirnseite an einer Stufe 20 des Leitungskörpers 12a an. Die Stufe 20 befindet sich an einem Flanschvorsprung 21, dessen der Stufe 34 entgegengesetzte Seite die Stirnwand 15 bildet. Der Flanschvorsprung 21 und der dem Flanschvorsprung 21 benachbarte Abschnitt des Gehäuserohrs 30a haben denselben Außendurchmesser, so dass ein homogener Übergang geschaffen ist.

Demgegenüber hat ein mittlerer Abschnitt 33 einen geringeren Durchmesser, wobei sich an den mittleren Abschnitt 33 wiederum eine schräg verlaufende Stufe 34 anschließt, an deren distalem Ende das Gehäuserohr 30a einen ähnlichen oder gleichen Durchmesser aufweist wie im Bereich des Flanschvorsprunges 21, so dass insgesamt eine als Bedienhandhabe geeignete Vertiefung 35 bzw. ein Bereich mit geringerem Durchmesser gebildet ist, der sich als Bedienhandhabe 36 zur Bedienung des Reifenfülladapters 10a eignet. Im Bereich der Vertiefung 35 können griffunterstützende Maßnahmen getroffen sein, beispielsweise eine rutschhemmende Beschichtung aus Kunststoff, Gummi oder dergleichen und/oder eine Riffelung. Insgesamt ist festzuhalten, dass das Gehäuserohr 30a zweckmäßigerweise aus Metall oder einem festen Kunststoffmaterial besteht, das einer Schiebebeanspruchung standhält, die nachfolgend noch beschrieben wird.

Der Leitungskörper 12a ist stirnseitig mit einer Stirnwand 22 verschlossen, die allerdings von einem oder mehreren Fluid-Durchlässen 23 durchsetzt ist. Durch die Fluid-Durchlässe 23 hindurch kann demnach ein Fluid, in der Regel Druckluft, aus dem Durchgangskanal 17 heraus nach vorn vor die Stirnwand 22 oder umgekehrt strömen. Somit ist also eine Strömungsverbindung von der Vorderseite 24 der Stirnwand 22 über die Fluid-Durchlässe 23 in den Durchgangskanal 17 und weiter zum Leitungsanschluss 11 durch den Leitungskörper 12a realisiert.

Es ist zwar im Sinne einer optimalen Druckdichtigkeit und Belastbarkeit, dass der Leitungskörper 12a einstückig ist. Es versteht sich allerdings, dass der Leitungskörper 12a auch mehrteilig sein könnte, wobei die einzelnen Komponenten zweckmäßigerweise fest miteinander verbunden sind, beispielsweise durch Verschrauben und/oder Verkleben.

Weiterhin besteht der Leitungskörper 12a zweckmäßigerweise aus Metall, insbesondere aus Edelstahl, wobei auch andere Materialien, beispielsweise entsprechend belastbarer Kunststoff oder dergleichen, ohne Weiteres möglich ist. Der Leitungskörper 12a hat an seiner dem Leitungsanschluss 11 entgegengesetzten Seite ein Stößel-Betätigungsglied 25 zum Betätigen eines Reifenventil-Verschlussstößels 86. Das Stößel-Betätigungsglied 25 wird durch einen Vorsprung 26, vorliegend einen zylindrischen Vorsprung, gebildet, der an der Vorderseite 24 der Stirnwand 22 angeordnet ist und vor diese vorsteht.

Das Gehäuserohr 30a weist an der dem Leitungsanschluss 11 entgegengesetzten Seite einen die Vertiefung 35 begrenzenden Flanschvorsprung 37 auf, an den sich zum distalen Ende hin ein Halteabschnitt 38 zum Halten eines Dicht-Betätigungsglieds 40a anschließt. Der Halteabschnitt 38 hat beispielsweise an seinem Außenumfang ein Gewinde, auf das das Dicht-Betätigungsglied 40a aufgeschraubt ist. Es versteht sich, dass alternativ auch ein Verkleben, Verklemmen, Verrasten oder dergleichen zu einer bevorzugten festen Verbindung zwischen einerseits dem Gehäuserohr 30a und andererseits dem Dicht-Betätigungsglied 40a möglich ist. Das Dicht-Betätigungsglied 40a schlägt mit seiner dem Gehäuserohr 30a zugewandten Stirnseite an dem Flanschvorsprung 37 an und hat zumindest im Übergangsbereich zu dem Gehäuserohr 30a denselben oder im Wesentlichen den gleichen Außenumfang wie das Gehäuserohr 30a, was in ergonomischer Hinsicht vorteilhaft ist.

Das Dicht-Betätigungsglied 40a ist hülsenartig ausgestaltet und kann auch als Klemm- oder Arretierhülse 41a bezeichnet werden.

Zwischen einem Halteabschnitt 42, der an dem Halteabschnitt 38 befestigt ist, und einer Stirnwand 62 des Dicht-Betätigungsglieds 40a befindet sich eine Rastausnehmung 44 einer Rastanordnung 45. Die Rastausnehmung 44 ist vorliegend ringförmig.

Ein Reifenventil-Anschlusskörper 81 des Reifenventils 80 ist durch eine Einstecköffnung 46 an der Stirnwand 43 einsteckbar. Der Reifenventil-Anschlusskörper 81 befindet sich an einem freien Ende 82 des Reifenventils 80. Er weist eine Umfangswand 83 auf, in deren Innenraum 84 ein Reifenventil-Durchgangskanal 85 verläuft. In dem Reifenventil-Durchgangskanal 85 ist der Verschlussstößel 86 angeordnet, mit dem der Durchgangskanal 85 verschließbar und öffenbar ist.

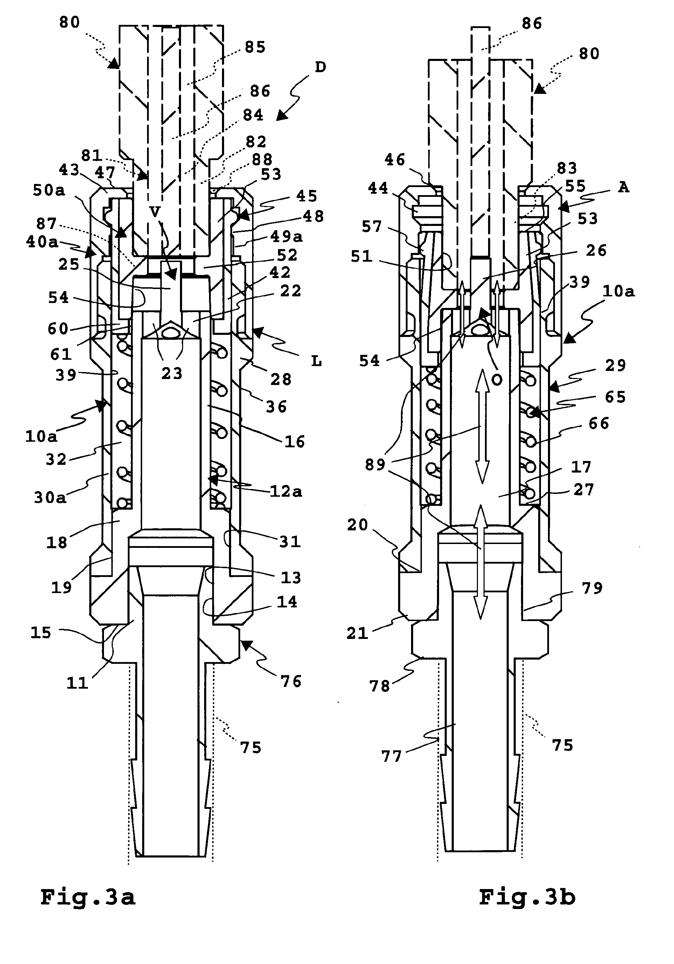

Dieses Öffnen und Schließen des Reifenventils 80 geschieht dann, wenn das Reifenventil 80 fluid-dicht mit dem Reifenfülladapter 10a verbunden ist. Zur fluidtechnischen Abdichtung dient eine Dichtung 50a, die einen Ventil-Aufnahmeraum 51 zur Aufnahme des Reifenventil-Anschlusskörpers 81 aufweist. Der Ventil-Aufnahmeraum 51 wird stirnseitig von einem Dichtring 52 und umfangsseitig von einem Dichtmantel 53 begrenzt. Der Ventil-Aufnahmeraum 51 bildet eine Steckaufnahme für den Reifenventil-Anschlusskörper 81. Mithin hat also die Dichtung 50a einen hohlzylindrischen Ventil-Aufnahmeraum 51, in den der entsprechend ebenfalls zylindrische Reifenventil-Anschlusskörper 81 einsteckbar ist. Dann schlägt seine Stirnseite 87 an dem Dichtring 52 an bzw. liegt an diesem an, was zum dichten Anschluss des Reifenventils 80 an den Reifenfülladapter 10a vorteilhaft ist. Der Dichtmantel 53 liegt außenseitig am Außenumfang 88 des Reifenventil-Anschlusskörpers 81 an, was ebenfalls zur druckdichten Aufnahme des Reifenventils 80 im Reifenfülladapter 10a beiträgt, auch wenn die Dichtung 50a sozusagen nur mit leichtem Druck nur mit leichtem Druck, insbesondere reibschlüssig, am Reifenventil-Anschlusskörper 81 anliegt, dieser mithin also noch aus dem Ventil-Aufnahmeraum 51 ausziehbar ist. Die entsprechende Lösestellung L ist in Figur 3a dargestellt. Jedenfalls stellt bereits die Lösestellung L eine Dichtstellung D dar, in welcher das Reifenventil 80 zumindest im Wesentlichen fluid-dicht mit dem Reifenfülladapter 10a verbunden ist.

An der dem Ventil-Aufnahmeraum 51 entgegengesetzten Seite der Dichtung 50a ist eine Dichtaufnahme 54 zur Aufnahme des Leitungskörpers 12a vorhanden. Der Dichtring 52, der Dichtmantel 53 sowie die Dichtaufnahme 54 sind vorliegend einstückig, d.h. von ein und demselben Dichtungsbauteil gebildet. Der Dichtring 52 bildet also sozusagen einen Ringvorsprung, der nach radial innen vor den Dichtmantel 53 bzw. die Umfangswand der Dichtaufnahme 54 vorsteht.

Der Ventil-Aufnahmeraum 51 und die Dichtaufnahme 54 sind jeweils kreiszylindrisch bzw. hohlzylindrisch. Es versteht sich, dass bei entsprechend polygonalem oder anders ausgeformten Außenumfang 88 des Reifenventil-Anschlusskörper 81 bzw. einem entsprechenden Außenumfang des Leitungskörpers 12a auch eine andere Ausgestaltung der beiden Aufnahmen 51, 54 vorgesehen sein kann. Im Sinne eines leichteren Einsteckens kann es auch sein, wenn der Ventil-Aufnahmeraum 51 und/oder die Dichtaufnahme 54 zu ihrer jeweiligen Öffnung hin konisch verlaufen, so dass bereits beim Einstecken des Reifenventil-Anschlusskörpers 81 bzw. des Leitungskörpers 12a eine umfangsseitige Dichtigkeit erzielt wird. Bei der Dichtaufnahme 54 ist beispielsweise ein solcher konischer Verlauf angedeutet.

Zur druckdichten Verbindung des Reifenventils 80 mit dem Reifenfülladapter 10a sind noch weitere Maßnahmen getroffen:
Solange die Dichtung 50a in der Lösestellung L ist, liegt eine Stirnseite 55 der Dichtung 50a am Außenumfang der Einstecköffnung 46, d.h. an der Stirnwand 43 innenseitig an. Somit bildet die Stirnwand 43 dort also einen Anschlag für die Dichtung 50a.

Die Dichtung 50a kann jedoch von der Lösestellung L in eine Klemm- oder Andrückstellung A gebracht werden, bei der sie am Außenumfang 88 des Reifenventil-Anschlusskörpers 81 fest anliegt bzw. an diesen Außenumfang 88 angedrückt ist. Zum Verstellen der Dichtung 50a von der Lösestellung L in die Andrückstellung A ist das Dicht-Betätigungsglied 40a vorgesehen. Wenn das Gehäuserohr 30a mit dem fest an diesem angeordneten Dicht-Betätigungsglied 40a in Richtung des Reifenventils 80 nach vorn verstellt wird, kann die Dichtung 50a die entsprechende Bewegung entlang der Steckachse 90 nicht mitmachen, da sie mit dem Dichtring 52 bzw. dem radialen Dichtvorsprung an der Stirnseite 87 des Reifenventil-Anschlusskörpers 81 anliegt.

Stattdessen wird die Dichtung 50a zum Stößel-Betätigungsglied 25 hin entlang der Steckachse 90 verstellt. Dabei wird die Dichtung 50a geführt, nämlich einerseits durch einen Dichtungshaltekörper 56a, in dem die Dichtung 50a zumindest im Wesentlichen aufgenommen ist und andererseits durch einen Führungskanal 39 in Innenraum des Gehäuserohrs 30a, an dem der Dichtungshaltekörper 56a innenseitig entlang gleitet. Somit bildet also das Gehäuserohr 30a einen Führungskörper 28 für die Dichtung 50a. Die Dichtung 50a ist in dem Führungskörper 28 axial verschieblich, nämlich entlang der Steckachse 90. Der Führungskörper 28 nimmt die Dichtung 50a auf und bildet insofern ein Führungsgehäuse 29, in dessen Innenraum 32 die Dichtung 50a sowie der Dichtungshaltekörper 56a angeordnet sind. Auch der Leitungskörper 12a verläuft abgesehen von seinem Flanschvorsprung 21 im Innenraum 32.

Der Reifenventil-Anschlusskörper 81 wird also sozusagen in ein Gehäuse des Reifenfülladapters 10a eingesteckt, bis er an der Stirnwand 43 und somit einer Stützfläche 47 des Reifenfülladapters 10a anschlägt (Figur 3b). Bei dieser Vorschubbewegung gelangen zunächst Rastvorsprünge 57 am Dichtungshaltekörper 56a außer Eingriff mit den Rastausnehmungen 44, werden dann von einem Klemmvorsprung 48, der beispielsweise als Ringvorsprung ausgestaltet ist, nach radial innen verdrängt und gelangen schließlich in den Bereich einer Klemmbahn 49, in deren Bereich sie den Dichtungshaltekörper 56a ebenfalls nach radial innen in Richtung des Außenumfangs 88 des Reifenventil-Anschlusskörpers 81 verdrängen.

Die Rastvorsprünge 57 sind radial außen an biegeflexiblen Lamellen 58 angeordnet, die von einem Zylinderabschnitt 59 des Dichtungshaltekörpers 56a abstehen. Man könnte auch sagen, dass der Dichtungshaltekörper 56a im Wesentlichen zylindrisch ist und im Bereich des Dichtmantels 53 Schlitze aufweist. Mithin sind die Lamellen 58 Segmente einer Zylinderwand des Dichtungshaltekörpers 56a. Die Lamellen 58 können also, wenn sie von außen druckbeaufschlagt werden, was im Bereich der Klemmbahn 49 der Fall ist, nach radial innen ausweichen, wobei sie einen Druck auf den Dichtmantel 53 ausüben und diesen an den Außenumfang 88 des Reifenventils 80 andrücken.

Somit bliebt also der Dichtring 52 stirnseitig in Anlage mit Reifenventil 80, während gleichzeitig der Dichtmantel 53 nach radial innen an das Reifenventil 80 gedrückt wird, ohne dass das Dicht-Betätigungsglied 40a die Dichtung 50a in Richtung der Steckachse 90 beaufschlagen oder stauchen würde. Also bleibt die Dichtung 50a entlang der Steckachse 90 sozusagen formstabil, während sie quer dazu, nämlich nach radial innen druckbeaufschlagt wird und in der Andrückstellung A den Reifenventil-Anschlusskörper 81 dicht umschließt.

Bei der Einsteckbewegung des Reifenventils 80 entlang der Steckachse 90 schlägt die Dichtung 50a mit ihrer dem Leitungskörper 12a zugewandten Stirnseite an einem Anschlag des Dichtungshaltekörpers 56a an, der vorliegend durch eine den Zylinderabschnitt 59 stirnseitig begrenzende Stirnwand gebildet ist. Es versteht sich, dass man die Dichtung 50a auch in den Dichtungshaltekörper 56a einkleben könnte oder auch auf andere Weise eine axiale Festlegung bezüglich der Steckachse 90 herstellen könnte.

Jedenfalls durchdringt der Leitungskörper 12a, konkret das Verbindungsrohr 16, die Stirnwand 60 an einer Öffnung 61, um beim Einstecken des Reifenventils 80 in den Reifenfülladapter 10a entlang der Steckachse 90 in die Dichtaufnahme 54 einzudringen. Dabei wird gleichzeitig das Stößel-Betätigungsglied 25 entlang der Steckachse 90 nach vorn, d.h. in Richtung des Reifenventils 80 aus seiner in Figur 3a dargestellten Verschlussstellung V, bei der der Reifenventil-Verschlussstößel 86 den Durchgangskanal 85 verschließt, in die in Figur 3b dargestellte Offenstellung O, bei der das Stößel-Betätigungsglied 25 den Verschlussstößel 86 in die Offenstellung O verlagert hat. Dann kann Fluid 89, beispielsweise Druckluft oder ein sonstiges Gas, vom Durchgangskanal 17 in den Durchgangskanal 85 strömen oder umgekehrt.

Insgesamt ergibt sich also eine ergonomische Handhabung dahingehend, dass beim Aufstecken des Reifenfülladapters 10a die Dichtung sozusagen automatisch ins Gehäuseinnere des Führungsgehäuses 29 verlagert wird und dabei in die Andrückstellung A gelangt, mithin also das Reifenfüllventil 80 druckdicht im Reifenfülladapter 10a aufgenommen ist.

Für die umgekehrte Bewegung, d.h. für das Entfernen des Reifenfülladapters 10a vom Reifenfüllventil 80 ist eine Federanordnung 65 zweckmäßig. Die Federanordnung 65 stützt sich einerseits an dem Führungskörper 28 ab, nämlich an einer Stufe 27, und andererseits über den Dichtungshaltekörper 56a an der Dichtung 50a. Die Federanordnung 65 enthält eine Schraubenfeder 66, die vom Verbindungsrohr 16 durchdrungen ist. Die Stufe 27 ist nunmehr zwischen dem Verbindungsrohr 16 und dem Halteabschnitt 18, der einen größeren Umfang als das Verbindungsrohr 16 aufweist, gebildet. Auf der anderen Seite, d.h. beim Dichtungshaltekörper 56a, stützt sich die Schraubenfeder 66 ringförmig an der Stirnwand 60 ab und somit an der darunterliegenden Stirnseite der Dichtung 50a. Wenn nun der Reifenfülladapter 10a vom Reifenfüllventil 80 abgezogen wird, drückt die Schraubenfeder 66 die Dichtung 50a aus der Andrückstellung A in Richtung der Lösestellung L, in dem sie den Dichtungshaltekörper 56a in Richtung der Einstecköffnung 46 beaufschlagt. Dabei gleitet der Dichtungshaltekörper 56a in dem Führungskanal 39 in Richtung der Einstecköffnung 46, wobei die Rastvorsprünge 57 an dem Klemmvorsprung 48 vorbeigelangen, um schließlich in der Lösestellung L in die Rastausnehmung 44 einzurasten. Dadurch nimmt die Druckbeaufschlagung von radial außen auf die Dichtung 50a ab, so dass der Dichtmantel 53 in die Lösestellung L gelangt, in der der Reifenventil-Anschlusskörper 81 aus dem Ventil-Aufnahmeraum 51 ausziehbar ist.

Bei der vorgenannten Auszugsbewegung oder Abziehbewegung des Reifenfülladapters 10a vom Reifenfüllventil 80 wird außerdem das Stößel-Betätigungsglied 25 vom Reifenventil-Verschlussstößel 86 wegbewegt, so dass dieser z.B. federbeaufschlagt in seine Verschlussstellung V gelangt und den Reifenventil-Durchgangskanal 85 verschließt.

Im Rahmen der Erfindung ist also eine ganz bequeme Handhabung dahingehend möglich, dass lediglich durch Aufstecken des Führungsgehäuses 29 auf das Reifenventil 80 ein druckdichter Anschluss des Reifenfülladapters 10a an das Reifenventil 80 möglich ist. Eine zusätzliche Betätigungshandlung dahingehend, dass ein Betätigungsglied von Hand relativ zu einem Führungsgehäuse oder Grundkörper eines Reifenfülladapters bewegt werden müsste, ist also nicht nötig, wäre aber alternativ zum Ausführungsbeispiel denkbar. Die Handhabung ist ergonomisch.

Im Rahmen der Erfindung ist also ein Dicht-Betätigungsglied 40a zu einem Stößel-Betätigungsglied 25 so beabstandet und/oder - beim Ausführungsbeispiel zwar nicht dargestellt - so bewegungsgekoppelt, dass die Dichtung 50a zunächst in die Andrückstellung A gelangt, bevor das Stößel-Betätigungsglied 25 in die Offenstellung A kommt. Dies ist beim Ausführungsbeispiel z.B. durch einen entsprechenden Abstand der Klemmvorsprünge 48 bzw. der Klemmbahn 49 zum Vorsprung 26 realisiert. Man könnte sich aber auch vorstellen, dass beispielsweise durch eine entsprechende Bewegungskopplung und/oder eine federnde Verbindung zwischen einem Stößel-Betätigungsglied und dem Dicht-Betätigungsglied ein solcher Bewegungsablauf bzw. "Dichtungs-Öffnungsablauf" realisierbar ist.

Es versteht sich, dass die Erfindung nicht auf das Ausführungsbeispiel beschränkt ist. Eine in der Zeichnung nicht dargestellte Ausführungsform kann beispielsweise vorsehen, dass die Dichtung 50a und/oder der Dichtungshaltekörper 56a durch ein am Innenumfang des Führungskanals 39 angeordneten Vorsprung in dem Innenraum 32 gehalten wird. Dann wäre es beispielsweise nicht erforderlich, dass die Dichtung 50a und/oder der Dichtungshaltekörper 56a innenseitig an der Stirnwand 22 anschlagen.

Weiterhin könnte anstelle der außenseitig vorgesehenen Stützfläche 47 auch innen ein Anschlag vorgesehen sein, der den Bewegungsweg der Dichtung 50a und/oder des Dichtungshaltekörpers 56a in Richtung der Andrückstellung A begrenzt.

Ferner könnte anstelle einer einzigen Schraubenfeder 66, die in einem Zwischenraum zwischen dem Verbindungsrohr 16 und der Innenseite des Gehäuserohrs 30a angeordnet ist, auch eine Anordnung aus zwei oder mehr Federn vorgesehen sein.

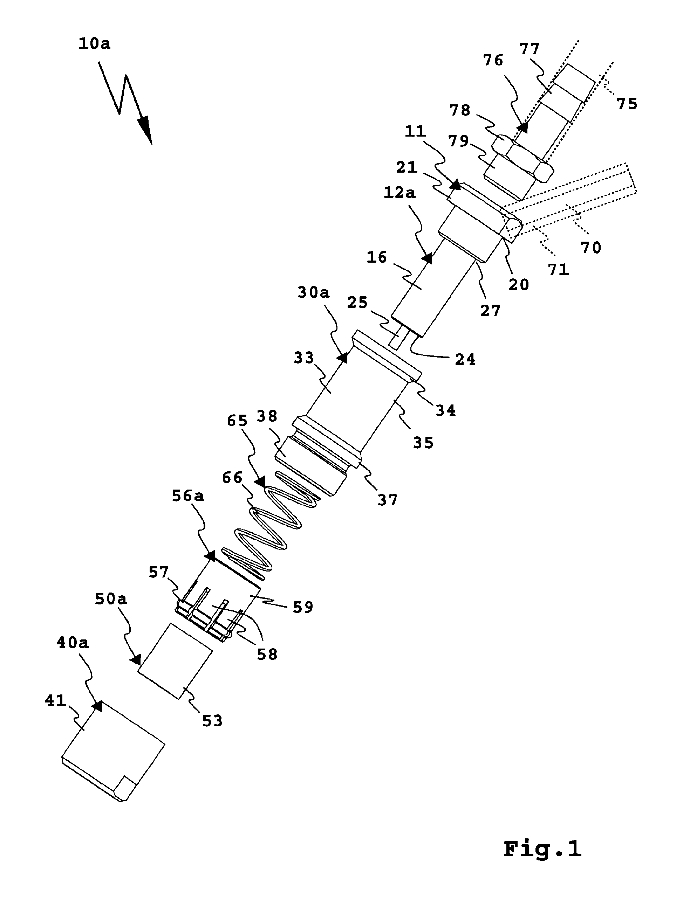

Eine Zug- und/oder Schubkraft zur Betätigung des erfindungsgemäßen Reifenfülladapters könnte auch von einer starren Fluidleitung 75 auf den Führungskörper 28 ausgeübt werden. Anstelle der Bedienhandhabe 36 direkt am Reifenfülladapter 10a könnte z.B. ein biegestabiles, insbesondere schräg, abstehendes Bedienteil 71 (schematisch in Figur 1) mit dem Dicht-Betätigungsglied 40a verbunden sein. In dem zweckmäßigerweise rohrartigen Bedienteil 71 kann eine mit dem Reifenfülladapter 10a fluid-verbundene Fluidleitung 70 verlaufen, die anstelle der Fluidleitung 75 vorgesehen ist.

Der erfindungsgemäße Reifenfülladapter kann beispielsweise auch einen Bestandteil eines Messgerätes bilden.

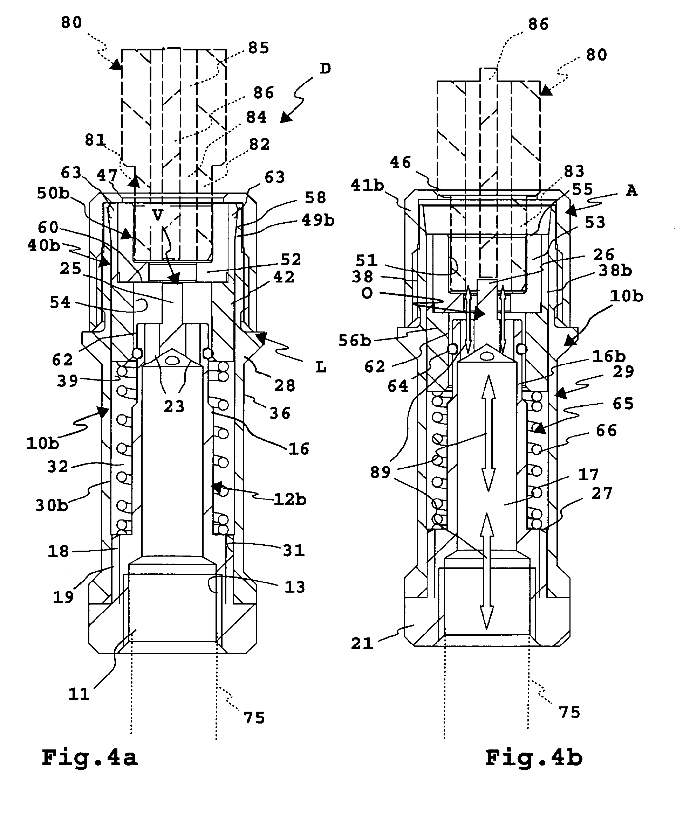

Bei einem in den Figuren 4a, 4b dargestellten zweiten Ausführungsbeispiel eines Reifenfülladapters 10b sind Komponenten, die beim Reifenfülladapter 10a ebenfalls vorhanden sind, mit denselben Bezugszeichen versehen. Soweit Unterschiede vorhanden sind, ist in der Regel der Kleinbuchstabe b statt des Kleinbuchstabens a beim jeweiligen Bezugszeichen verwendet.

Der Reifenfülladapter 10b hat ein Gehäuserohr 30b, das im Unterschied zum Leitungskörper 12a unmittelbar ein Dicht-Betätigungsglied 40b realisiert. Mit dem Leitungskörper 12b, der ansonsten im Wesentlichen dem Leitungskörper 12a entspricht, ist unmittelbar eine Dichtung 50b aus einer Lösestellung L, in der das Reifenventil 80 in den Reifenfülladapter 10b einsteckbar oder aus diesem ausziehbar ist, in eine Andrückstellung A verstellbar, bei der ein Dichtmantel 53 der Dichtung 50b am Außenumfang 88 des Reifenventil-Anschlusskörpers 81 dicht im Klemmsitz anliegt.

Die Einstecköffnung 46 ist an einer Verschlusshülse 41b vorgesehen, die auf einen Halteabschnitt 38 des Leitungskörpers 12b aufgeschraubt ist. Die Verschlusshülse 41b verschließt den Reifenfülladapter 10b also auf derjenigen Seite, an der die Einstecköffnung 46 zum Einstecken des Reifenventil-Anschlusskörpers 81 angeordnet ist, hat aber im Unterschied zu der Arretierhülse 41a keine Betätigungsfunktion.

Eine Innenseite des Leitungskörpers 12b, etwa dort wo sich der Halteabschnitt 38 befindet, bildet einen Betätigungsabschnitt 38b, der auf die Dichtung 50b über einen Dichtungshaltekörper 56b wirkt. Ein vorderer, dem Dichtmantel 53 zugeordneter Abschnitt des Dichtungshaltekörpers 56b entspricht demjenigen des Dichtungshaltekörpers 56a, das heißt er hat Lamellen 58, die radial bezüglich des Dichtmantels 53 verstellbar sind. An den Lamellen 58 sind radial außen Klemmvorsprünge 63 angeordnet, die geometrisch etwa den Rastvorsprüngen 57 entsprechen. Die Klemmvorsprünge 63 stehen also nach radial außen vor die Lamellen 58 vor und dienen zum Anklemmen der Dichtung 50b an den Reifenventil-Anschlusskörper 81.

Wenn das Reifenventil 80 in den Innenraum des Reifenfülladapters 10b eingeschoben wird, schlägt dessen Stirnseite 87 an der Stirnseite des Ventil-Aufnahmeraums 51 an. Beim weiteren Vorschieben des Ventils 80 in den Innenraum des Reifenfülladapters 10b oder Vorschieben des Reifenfülladapters 10b in Richtung des Reifenventils 80 wird die vom Dichtungshaltekörper 56b gehaltene Dichtung 50b in Richtung des Stößel-Betätigungsglieds 25 geschoben, so dass dieses aus seiner Verschlussstellung V in die Offenstellung O gelangt, mithin also den Reifenventil-Verschlussstößel 86 öffnet (Figur 4b). Dabei wird gleichzeitig die Dichtung 50b von Ihrer Lösestellung L in die Andrückstellung A verstellt, indem die Klemmvorsprünge 63 an einer Klemmschräge 49b am Innenumfang des Betätigungsabschnitts 38b entlang gleiten und dabei nach radial innen verstellt werden, so dass sie den Dichtmantel 53 an den Außenumfang 88 des Reifenventil-Anschlusskörpers 81 andrücken. Ein Verrasten wie beim Reifenfülladapter 10a findet also beim Reifenfülladapter 10b nicht statt, wäre aber prinzipiell auch realisierbar.

Die Abdichtung zwischen einerseits dem Ventil-Aufnahmeraum 51 und andererseits dem Leitungskörper 12b ist jedoch alternativ zum Reifenfülladapter 10a realisiert:
Der Dichtungshaltekörper 56b weist eine Aufnahme 62 auf, in der ein Dichtabschnitt 16b des Leitungskörpers 12b aufgenommen ist, jedoch nicht feststehend, sondern linear beweglich. Am Außenumfang des Dichtabschnitts 16b, der sozusagen am freien Ende des Verbindungsrohrs 16 vorgesehen ist, befindet sich ein Dichtungselement 64, beispielsweise ein O-Ring. Zum Halten des Dichtungselements 64 am Dichtabschnitt 16b ist zweckmäßigerweise eine Ringnut vorgesehen, wobei man selbstverständlich ein Dichtelement auch verkleben oder eine Dichtbeschichtung vorsehen könnte.

Jedenfalls ist das Dichtungselement 64 am Außenumfang des Dichtabschnitts 16b angeordnet und gleitet am Innenumfang der Aufnahme 62 bei einer linearen Verstellung des Reifenfülladapters 10b zwischen der Andrückstellung A und der Lösestellung L (Figuren 4b, 4a) entlang. Das Dichtungselement 64 stellt zusammen mit der Dichtung 50b zumindest in der Andrückstellung A, aber auch bereits in der Dichtstellung D eine druckdichte Verbindung zwischen einerseits dem Reifenfülladapter 10b und andererseits dem Reifenventil 80 her.

Das Dichtungselement 64 ist derart dicht, dass eine stirnseitige Abdichtung zwischen dem Verbindungsrohr 16 und dem Dichtring 52 der Dichtung 50b in der Offenstellung O nicht erforderlich ist. Es versteht sich, dass eine solche stirnseitige Abdichtung auch denkbar wäre.

## Patentansprüche

1. Reifenfülladapter zum Anschluss einer Fluidleitung (75) an ein Reifenventil (80), mit einem Ventil-Aufnahmeraum (51), in den ein Reifenventil-Anschlusskörper (81) an einem freien Ende (82) des Reifenventils (80) entlang einer Steckachse (90) einsteckbar ist, mit einer Dichtung (50a; 50b), die in eine den Reifenventil-Anschlusskörper (81) fluid-dicht mit dem Reifenfülladapter (10a; 10b) verbindende Dichtstellung (D) bringbar ist, und mit einem zwischen einer Offenstellung (O) und einer Schließstellung verstellbaren Stößel-Betätigungsglied (25) zum Betätigen eines in einem Innenraum (84) des Reifenventil-Anschlusskörpers (81) angeordneten Reifenventil-Verschlussstößels (86), der in der Offenstellung (O) einen den Reifenventil-Anschlusskörper (81) durchsetzenden Reifenventil-Durchgangskanal (85) offen hält, so dass eine Fluid-Verbindung zwischen dem Reifenventil-Durchgangskanal (85) und mindestens einem mit dem Leitungsanschluss (11) für die Fluidleitung (75) kommunizierenden und an einem Leitungskörper (12a; 12b) angeordneten Fluid-Durchlass (23) des Reifenfülladapters (10a; 10b) vorhanden ist, **dadurch gekennzeichnet, dass** der Reifenfülladapter (10a; 10b) einen Führungskörper (28) zum beweglichen Führen des Stößel-Betätigungsglieds (25) und der Dichtung (50a; 50b) relativ zueinander aufweist, so dass der Verschlussstößel, während die Dichtung (50a; 50b) in der Dichtstellung (D) ist, durch das Stößel-Betätigungsglied (25) zwischen der Offenstellung (O) und der Verschlussstellung (V) verstellbar ist, in der der Reifenventil-Verschlussstößel (86) den Reifenventil-Durchgangskanal (85) verschließt.

2. Reifenfülladapter nach Anspruch 1, **dadurch gekennzeichnet, dass** der Leitungskörper (12a; 12b) in der Offenstellung (O) des Stößel-Betätigungsglieds (25) an der Dichtung (50a; 50b), insbesondere einem Dichtring (52), insbesondere stirnseitig, anliegt und/oder die Dichtung (50a; 50b) zu dem Reifenventil-Anschlusskörper (81) hin betätigt.

3. Reifenfülladapter nach Anspruch 1 oder 2, **dadurch gekennzeichnet, dass** die Dichtung (50a; 50b) einen Dichtring (52) zur Anlage an einer Stirnseite (87) des Reifenventil-Anschlusskörpers (81) umfasst und/oder dass die Dichtung (50a; 50b) einen Dichtmantel (53) zur Anlage an einem Außenumfang (88) des Reifenventil-Anschlusskörpers (81) aufweist und/oder dass die Dichtung (50a) eine Dichtaufnahme (54) zur Aufnahme des Leitungskörpers (12a) aufweist und/oder dass an einem Außenumfang des Leitungskörpers (12b) ein Dichtungselement (64) zur Anlage an einem Innenumfang einer Aufnahme (62) angeordnet ist, in welcher der Leitungskörper (12b) zumindest in der Offenstellung (O) aufgenommen ist.

4. Reifenfülladapter nach Anspruch 3, **dadurch gekennzeichnet, dass** der Dichtring (52) und/oder der Dichtmantel (53) und/oder die Dichtaufnahme (54) fest miteinander verbunden, insbesondere einstückig, sind.

5. Reifenfülladapter nach einem der vorhergehenden Ansprüche, **dadurch gekennzeichnet, dass** die Dichtung (50a; 50b), insbesondere mindestens ein Mantelabschnitt der Dichtung (50a; 50b), in einer an den Reifenventil-Anschlusskörper (81) angedrückten Andrückstellung (A) bezüglich der Steckachse (90) im Wesentlichen ohne axiale Stauchung ist.

6. Reifenfülladapter nach einem der vorhergehenden Ansprüche, **dadurch gekennzeichnet, dass** der Führungskörper (28) und das Stößel-Betätigungsglied (25) bewegungsfest miteinander verbunden sind und mindestens ein Bestandteil der Dichtung (50a; 50b) oder die Dichtung (50a; 50b) insgesamt an dem Führungskörper (28) mittelbar oder unmittelbar geführt relativ zum dem Stößel-Betätigungsglied (25) beweglich gelagert ist.

7. Reifenfülladapter nach einem der vorhergehenden Ansprüche, **dadurch gekennzeichnet, dass** das Stößel-Betätigungsglied (25) feststehend und/oder die Dichtung (50a; 50b) schiebebeweglich in einem Innenraum des Führungskörpers (28) angeordnet ist und/oder der Führungskörper (28) ein Führungsgehäuse (29) umfasst.

8. Reifenfülladapter nach einem der vorhergehenden Ansprüche, **dadurch gekennzeichnet, dass** er ein Dicht-Betätigungsglied (40a; 40b) zum Andrücken der Dichtung (50a; 50b) zu dem Reifenventil-Anschlusskörper (81) hin in eine Andrückstellung (A) aufweist.

9. Reifenfülladapter nach Anspruch 8, **dadurch gekennzeichnet, dass** das das Dicht-Betätigungsglied (40a; 40b) in der Andrückstellung (A) einen Dichtmantel (53) der Dichtung (50a; 50b) ringförmig oder teilringförmig nach radial innen in Richtung eines Außenumfangs (88) des Reifenventil-Anschlusskörpers (81) drückt und/oder dass das Dicht-Betätigungsglied (40a; 40b) und die Dichtung (50a; 50b) relativ zueinander schiebebeweglich gelagert sind und/oder dass das Dicht-Betätigungsglied (40a; 40b) durch den Führungskörper (28) gebildet oder an dem Führungskörper (28) angeordnet ist und/oder dass die Dichtung (50a; 50b) zumindest teilweise in oder an einem Dichtungshaltekörper (56a; 56b) feststehend gehalten ist, wobei das Dicht-Betätigungsglied (40a; 40b) und der Dichtungshaltekörpers (56a; 56b) relativ zueinander verschieblich sind und die Dichtung (50a; 50b) bei einem Verschieben durch das Dicht-Betätigungsglied (40a; 40b) über den Dichtungshaltekörper (56a; 56b) zu dem Reifenventil-Anschlusskörper (81) hin verstellbar ist.

10. Reifenfülladapter nach Anspruch 9, **dadurch gekennzeichnet, dass** der Dichtungshaltekörper (56a; 56b) einen Schutzkäfig und/oder eine Lamellenstruktur umfasst und/oder dass der Dichtungshaltekörper (56a; 56b) ein Führungsbauteil zum Führen der Dichtung (50a; 50b) an oder in dem Führungskörper (28) bildet.

11. Reifenfülladapter nach einem der vorhergehenden Ansprüche, **dadurch gekennzeichnet, dass** eine Federanordnung (65) die Dichtung (50a; 50b) zu dem Reifenventil-Anschlusskörper (81) hin belastet.

12. Reifenfülladapter nach Anspruch 11, **dadurch gekennzeichnet, dass** die Federanordnung (65) die Dichtung (50a; 50b), insbesondere ringförmig, zu einer und/oder auf eine Stirnseite (87) des Reifenventil-Anschlusskörpers (81) hin belastet und/oder dass die Federanordnung (65) die Dichtung (50a; 50b) insbesondere ringförmig zu einer Stirnseite (87) des Reifenventil-Anschlusskörpers (81) hin belastet.

13. Reifenfülladapter nach einem der vorhergehenden Ansprüche, **dadurch gekennzeichnet, dass** er eine Stützfläche (47) zum Abstützen an dem Reifenventil (80) aufweist derart, dass der Reifenventil-Anschlusskörper (81) beim Aufstecken des Reifenfülladapters (10a; 10b) auf das Reifenventil (80) die Dichtung (50a; 50b) in Richtung des Stößel-Betätigungsglieds (25) verstellt und/oder dass er eine Rastanordnung (45) zum Verrasten der Dichtung (50a; 50b) in einer an den Reifenventil-Anschlusskörper (81) angedrückten Andrückstellung (A) und/oder in einer Lösestellung (L) aufweist, in der die Dichtung (50a; 50b) und der Reifenventil-Anschlusskörper (81) voneinander lösbar sind.

14. Reifenfülladapter nach einem der vorhergehenden Ansprüche, **dadurch gekennzeichnet, dass** das Stößel-Betätigungsglied (25) an einer Stirnseite (87) eines den mindestens einen Fluid-Durchlass (23) aufweisenden Leitungsabschnitts angeordnet ist.

15. Reifenfüllgerät (72) und/oder Messgerät mit einem Reifenfülladapter nach einem der vorhergehenden Ansprüche.
